(19) Europäisches Patentamt / European Patent Office / Office européen des brevets

(11) **EP 3 770 772 A1**

(12) **EUROPEAN PATENT APPLICATION**

(43) Date of publication:
27.01.2021 Bulletin 2021/04

(51) Int Cl.:
*G06F 16/9032* (2019.01)

(21) Application number: 19187541.8

(22) Date of filing: 22.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **Bayerische Motoren Werke
Aktiengesellschaft
80809 München (DE)**

(72) Inventors:
• **Tian, Jilei
Chicago, IL Illinois 60605 (US)**
• **Hu, Wangsu
Chicago, IL Illinois 60661 (US)**

(54) **PROACTIVE RECOMMENDATION FROM MULTI-DOMAIN DIALOGUE SYSTEM SUPPORTING SERVICE DISCOVERY**

(57) Given a method for providing a follow-up recommendation responsive to a response action toward the user, it is an objective of the present invention to proactively recommend service or API to improve user experience and service discovery for service providers. The objective is solved by the method comprising: receive a signal indicating the response action; receive context data specifying a dialogue context; for each alternative recommendation in a list of recommendations, calculate a likelihood that the alternative recommendation is a next recommendation, given the context data; determine the alternative recommendation with the highest likelihood of being the next more relevant recommendation as the follow-up recommendation; and send a signal indicating the follow-up recommendation.

FIG 1

**Description**

The invention relates to a method and a storage medium for proactively providing system initiated recommendation responsive to an action toward user according to claim 1 and 6 respectively.

Typical automatic dialogue systems ramps down and close dialogue sessions after they has provided answers to a user's questions. Human assistance, on the other hand, are better at understanding a client's need during a dialogue session and, based thereon, proactively provide more information and recommendations for further services that the client initially did not explicitly ask for.

There a many reasons why a user would not explicitly ask for further information or services, even though he or she would be interested. For example, the user may not know that the service is available from the dialogue system. The service may also be new, meaning the user may have an outdated understanding of the services provided via the dialogue system. The reason may also be distractions, limitations or disabilities that prevents the user from explicitly ask for the service.

The deficiency identified in the automatic dialogue systems is solved by the method of claim 1 and the storage medium of claim 6.

In particular, the deficiency is solved by

a method for providing a follow-up recommendation responsive to a response action toward the user,

the method comprising:

a) receive a signal indicating the response action;
b) receive context data specifying a dialogue context for a given dialogue session;
c) for each alternative recommendation in a list of recommendations, calculate a likelihood that the alternative recommendation is relevant as a next recommendation, given the context data for the given dialogue session;
d) determine the alternative recommendation with the highest likelihood of being relevant as the next recommendation as the follow-up recommendation; and
e) send a signal indicating the follow-up recommendation.

The recommendations are typically relevant recommendations. Calculate likelihood may be based on what the user wants.

Advantages include benefits for both consumers and service providers. Consumer can get smart value-added service without remembering or knowing new service is available. Service providers may get their services automatically recommended without effort to promote the services within a developer community, as it will be used directly by consumer from the smart service discovery from the dialogue system.

In one embodiment, step c) and step d) includes solving

$$j^* = \underset{j}{\arg\max}\, P\left(a_i \to a_j \mid x\right)$$

where j* is the index of the follow-up recommendation, j is the index of each alternative recommendation $a_j$, and $a_i$ is the response action, and x is context data for a given dialogue session.

In one embodiment, the context data includes information on one or more of day of week, time of day, user location, user profile, and/or dialogue session information such as domain and/or intent of user.

In one embodiment, the likelihood that the alternative recommendation is the next recommendation, for each alternative recommendation, given the context data, is estimated based on user feedback from previous dialogue sessions.

In one embodiment, the list of recommendations is determined from available services based on at least one input parameter of each available service of the available services and on at least one output parameter of the response action.

The deficiency is further solved by a computer-readable medium comprising instructions which, when executed by an instruction executing system, cause the system to carry out the steps of one of the herein disclosed method.

The benefits and advantages of the computer-readable medium are equal or similar to the advantages of the above-mentioned method.

In the following, embodiments of the invention are described with respect to the figures, wherein

Fig. 1   shows general spoken dialogue system;
Fig. 2   shows an illustration over interactive and trainable dialogue system proactively supporting recommendation with service discovery;

Fig. 3   shows a method for providing recommendation responsive to an action toward the user.

In the application, the following terminology is used:

- Intent: a predefined concept to describe how user messages should be categorized, e.g., <'I want to book a table for dinner time for two people'> -> intent: *restaurant book*
- Entity: a predefined concept to describe required pieces of information from a user's message (utterance), e.g., <'I want to book a table for dinner time for two people'> -> *entity type:* party size; *entity value*: two
- Domain: a predefined concept to describe high-level tasks that the dialogue is aimed to do, e.g., *restaurant booking, weather query.*
- Agent: an API that allows system to train/load/use model such as natural language understanding (NLU) semantic model and Policy model
- Action: the outcome of an agent (bot), runs in response to user utterance, e.g., *response utterance, API call, control command*
- State: every user's utterance and bot response in a convention history creates an agent state (e.g. running a bot action, receiving a user message, setting slots) that will be featurized to embed current dialogue (e.g., if intents and entities recognized, which slots are currently defined, the results of any API calls stored in slots, what the last action was, etc.
- Slot: the bot's memory that act as a *key-value store* which can be used to store information the user provided (e.g their home city) as well as information gathered about the outside world (e.g. the result of a database query).
- Interactive learning: users provide feedback/correction to the bot while talking to it. This is a powerful way to explore what the bot can do, and the easiest way to correct any mistakes the bot makes.

User's context, embedded both in the dialogue session, user profile and environment, can enrich the semantic understanding of user's query for a dialogue system, similar to the dialogue among human.

E.g. when a user asks "can you find the gas station nearby or close to my home?". It would be better if the dialogue can access the user's profile about home location and nearby based on a signal indicating the current location, to be able to reply accurately to the user with expected information, rather than having to ask the user to provide the location of home and current location.

The present disclosure of service discovery and recommendation can further enhance and enrich the service that dialogue can offer.

I.e. when a user asks "Please help to setup the destination to Northwestern Memorial Hospital?", a semantic modeling in the dialogue system can understand the intent of "find destination" and entity of location as "Northwestern Memorial Hospital", and the dialogue system can further issue e.g. a "HERE Place API" call, to receive the necessary location (e.g. geographical coordinates in lat/lon).

A typical dialogue system would then ramps down and close the dialogue session.

In human assistance services, it may be natural to ask the user if a restaurant booking is needed (if it is close to lunch), or if a parking service is required (if it is difficult to find parking). Both service needs the location that is available from the previous HERE Place API call.

Furthermore, service recommendation can be continuously improved, e.g. using collaborative filtering on the service recommendation with user's feedback from the dialogue, e.g. accept / reject the service recommendation depending on API issuing.

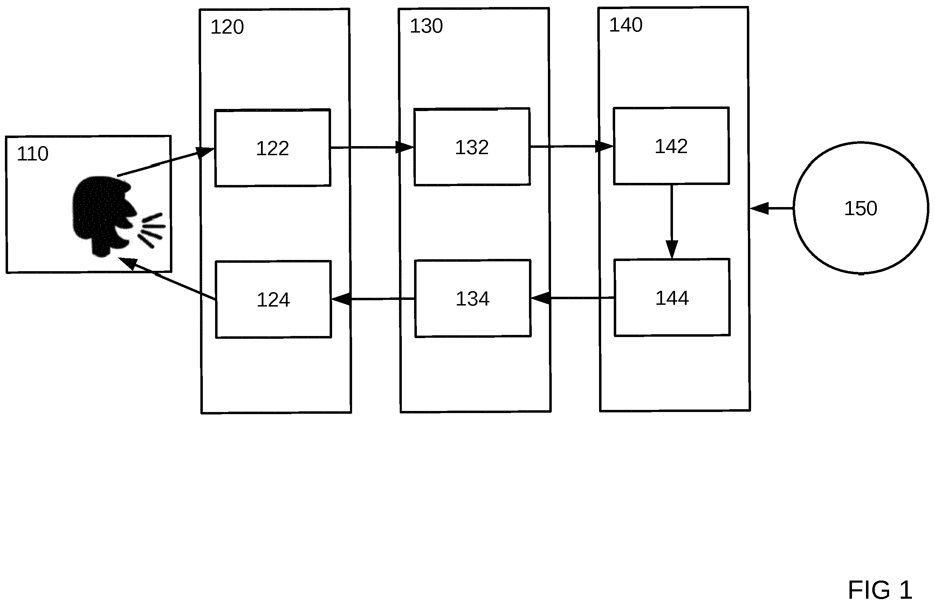

Fig. 1 shows general spoken dialogue system including user 110, Voice user interface (Voice UI) 120, Natural Language Processing (NLP) 130, Dialogue Management 140, Business Rule, Domain knowledge and Service 150. Voice user interface (Voice UI) 120 including Speech Recognition 122 and Speech Synthesis. Natural Language Processing (NLP) 130 including Language Understanding 132 and Natural Language Generation 134. Dialogue Management 140 including Dialogue State tracking 142 and Dialogue Policy 144.

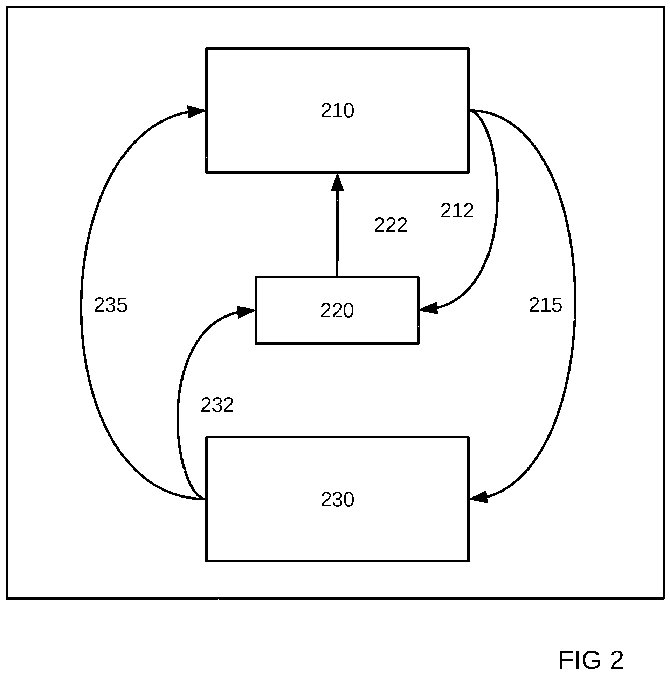

Fig. 2 shows an illustration over interactive and trainable dialogue system, including user 230, agent 210, user response to agent (e.g. utterance) 235, Agent response to user (e.g. utterance, API, or control). Fig. 2 also shows user feedback 232 and action to follow up 212. User feedback 232 and action to follow up 212 are input to Service or API Recommend System 220. The Service or API Recommend System 220 sends a signal to the agent 210 with follow up recommendations 222.

Service or API Recommend System 220 may work as follows. To ease the understanding, an API is taken throughout the disclosure. Provided N number of APIs with each API of the APIs described with input and output in service metadata. As an example, "HERE Place API" and "Parking API" are used.

HERE Place API:
Input:        POI or Address;
Output:      Location;

E.g. Parking API:
Input:        Location, Datetime;
Output:      Parking_Location, Price, Availability;

In this example, a user asks: "Please help to setup the destination to Northwestern Memorial Hospital?"

| The NLU will output: | Intent="Find a Destination"; | |
| Policy: | Entity={"POI": "Northwestern Memorial Hospital"} | |
| | Action="Issue HERE-Place-API" | |
| | Output: {"Location": ["lat":41.894897, "lon":-87.621316]} | |
| Recommendation: | Input: | Location |
| | Output: | Parking-API |
| | Model: | Based on collaboratively learnt association between (HERE-Place-API, Parking-API); |
| | | Based on the personal profile and context; |

Follow up action in the dialogue system may be provided according to the following process sequence. Based on the input from recommendation, a policy model introduces and makes an action for follow up for the recommendation engine. The recommendation engine responds to the agent with follow up recommendations.
Thus, the policy engine proactively asks the user for recommended services. The user may in turn accept or reject the recommendation, and this provides feedback to both agent and recommendation engine. Based on the recommendation feedback the system gets from the user, as well as connecting the feedback with a context and a profile of the user, the system can be improved iteratively to provide better recommendations to users.

A recommendation algorithm may work as follows. During dialogue system usage, users interact with the system and are provided with recommended service. Thus, the system is able to collect data on users' feedback to improve the recommendation model. The recommendation system may use semantic annotation to match the input and output parameter of paired services. E.g.: output parameters ("lat" and "lon") of HERE-Place-API have the same semantic slot as an input parameter of Parking-API.

This parameter-matching may be used to measure the matching degree, by e.g. counting the number of parameters that are common between two services. It may also be used to filter services, or as algorithm, so as a collaborative filter algorithm, so the bigger probability that the link of two services in the dialogue data with user's feedback, the higher rank the recommended service gets.

The data model used for recommendation algorithm may have data as follows (including user, item, rating, context, and content information):

- User u: user ID;
- Item a: API;
- Rating r: positive if acceptance, negative if rejection;
- Content c: user may have explicit profile like home/work, ...; API can be described by metadata of input and output;
- Context x: temporal and spatial when initiating the dialogue;

The objective of the model may be as follows: at time $t$, assume call API $a_t$, the objective is to recommend a next API call $a_{t+1}$. The input parameters for generating recommendation $a_{t+1}$ are all available parameters from the previous API call $a_t$ including context and dialogue as part of slots.

The recommendation algorithm may include the following. Assume user $u$ is served by API $a_i$ at time $t$, the recommended next API $a_j$ is estimated as:

$$P\left(a_i \rightarrow a_j \mid x\right) = \frac{P\left(x \mid a_i \rightarrow a_j\right) \cdot P\left(a_i \rightarrow a_j\right)}{P(x)} \propto P\left(x \mid a_i \rightarrow a_j\right) \cdot P\left(a_i \rightarrow a_j\right)$$

$$j^* = \underset{j}{\mathrm{argmax}}\, P\big(a_i \rightarrow a_j \mid x\big) = \underset{j}{\mathrm{argmax}}\big\{P\big(x \mid a_i \rightarrow a_j\big) \cdot P\big(a_i \rightarrow a_j\big)\big\}$$

With Laplacian smoothing, we have

$$P\big(a_i \rightarrow a_j\big) = P\big(a_j \mid a_i\big) = \begin{cases} \dfrac{count\big(a_i \rightarrow a_j\big) + 1}{count\big(a_i\big) + V}, & if\, count\big(a_i\big) \neq 0 \; and \; count\big(a_i \rightarrow a_j\big) \neq 0 \\ floor, & Otherwise \end{cases}$$

floor is set as a small number used for backoff to prevent dead link of $a_i \rightarrow a_j$.

A context model of the recommendation algorithm may include the following. $P(x \mid a_i \rightarrow a_j)$ is context model to estimate context likelihood when API $a_j$ is called after API $a_i$. Example of context may be day of week, time of day, location, domain or intent of user from the dialogue system.

The context model may be:

$$P\big(x \mid a_i \rightarrow a_j\big) = \frac{count(a_i \rightarrow a_j,\, x)}{count(a_i \rightarrow a_j)}$$

The context may need to be clustered, either by data-driven learning or defined by human intervention.

| | | |
|---|---|---|
| Example: | time => | morning, noon, afternoon, evening, night; |
| | date = > | Mon, Tues, ..., Fri, weekend, holiday; |
| | location => | home, work, school, shop, gym, gas station, like semantic category of POI; |
| | user => | profile, e.g. gender, age, ...; |
| | dialogue => | domain, e.g. restaurant booking, service appointment, etc. |

Advantages include improved user experience and relevancy of service. Available APIs may be updated system through Service Discovers. Advantages include that services or APIs can be automatically added to the system. This may be done by comparing input parameters of potential APIs with output parameters of existing APIs. It may also be done based on user feedback. E.g. if a user askes for a service that is currently not available, a search for an API that provides this service may be initiated. There may also be API services for retrieving updates of available APIs, i.e. an API service that provides information about available APIs and/or their metadata such as description and input and output parameters.

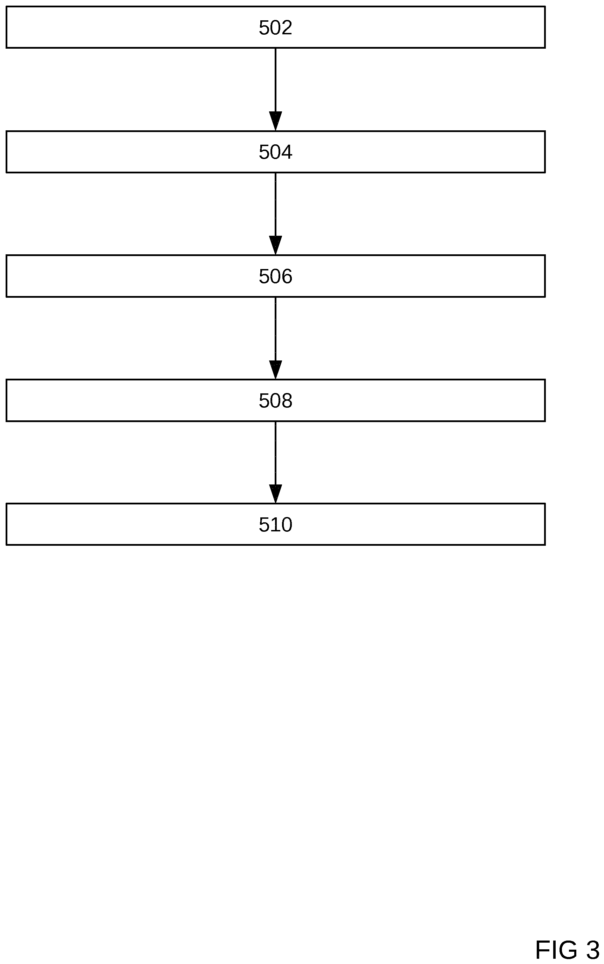

Fig. 3 shows a method for providing recommendation responsive to an action, including receiving 502 a signal indicating a response action at; receiving 504 context data specifying a context; for each alternative recommendation in a list of recommendations, determine 506 a likelihood that the alternative recommendation is a next recommendation, given the context data; determine 508 the alternative recommendation with the highest likelihood of being the next recommendation as follow-up recommendation; and send 510 a signal indicating the follow-up recommendation.

**Claims**

1. A method for providing a follow-up recommendation responsive to a response action, the method comprising:

   a) receive a signal indicating the response action;
   b) receive context data specifying a dialogue context for a given dialogue session;
   c) for each alternative recommendation in a list of recommendations, calculate a likelihood that the alternative recommendation is relevant as a next recommendation, given the context data for the given dialogue session;
   d) determine the alternative recommendation with the highest likelihood of being relevant as the next recommendation as the follow-up recommendation; and
   e) send a signal indicating the follow-up recommendation.

**2.** The method of claim 1,
wherein step c) and step d) includes solving

$$j^* = \underset{j}{\mathrm{argmax}}\, P\big(a_i \to a_j \mid x\big)$$

where j* is the index of the follow-up recommendation, j is the index of each alternative recommendation $a_j$, and $a_i$ is the response action, and x is context data for the given dialogue session.

**3.** The method of claim 1 or claim 2,
wherein the context data includes information on one or more of day of week, time of day, user location, user profile, and/or dialogue session information such as domain and/or intent of user.

**4.** The method of any of the preceding claims,
wherein the likelihood that the alternative recommendation is the next recommendation, for each alternative recommendation, given the context data, is estimated based on user feedback from previous dialogue sessions.

**5.** The method of any of the preceding claims,
wherein the list of recommendations is determined from available services based on at least one input parameter of each available service of the available services and on at least one output parameter of the response action.

**6.** A computer-readable medium comprising instructions which, when
executed by an instruction executing system, cause the system to carry out the steps of the method of one of the preceding claims.

FIG 1

FIG 2

| 502 |
| --- |

| 504 |
| --- |

| 506 |
| --- |

| 508 |
| --- |

| 510 |
| --- |

FIG 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/113939 A1 (CHEN HAO [CN] ET AL) 26 April 2018 (2018-04-26) * figure 1 * ----- | 1-6 | INV. G06F16/9032 |
| X | WO 02/073331 A2 (SEMANTIC EDGE GMBH [DE]) 19 September 2002 (2002-09-19) * page 6 - page 10; figure 5 * ----- | 1-6 | |
| X | US 2015/142704 A1 (LONDON JUSTIN [US]) 21 May 2015 (2015-05-21) * paragraph [0142] - paragraph [0150]; figure 1 * ----- | 1-6 | |
| X | US 9 473 637 B1 (VENKATAPATHY SRIRAM [FR] ET AL) 18 October 2016 (2016-10-18) * figures 1-2 * ----- | 1-6 | |
| X | WO 2019/051845 A1 (MICROSOFT TECHNOLOGY LICENSING LLC [US]; WU XIANCHAO [JP]) 21 March 2019 (2019-03-21) * figures 1-2 * ----- | 1-6 | TECHNICAL FIELDS SEARCHED (IPC) G06F |

The present search report has been drawn up for all claims

| Place of search | Date of completion of the search | Examiner |
|---|---|---|
| Munich | 12 December 2019 | Yotova, Polina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 7541

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2019

| Patent document cited in search report | | | Publication date | Patent family member(s) | | Publication date |
|---|---|---|---|---|---|---|
| US 2018113939 | A1 | | 26-04-2018 | NONE | | |
| WO 02073331 | A2 | | 19-09-2002 | NONE | | |
| US 2015142704 | A1 | | 21-05-2015 | US 2015142704 A1<br>US 2016117593 A1<br>WO 2015077398 A1 | | 21-05-2015<br>28-04-2016<br>28-05-2015 |
| US 9473637 | B1 | | 18-10-2016 | EP 3125235 A1<br>US 9473637 B1 | | 01-02-2017<br>18-10-2016 |
| WO 2019051845 | A1 | | 21-03-2019 | CN 110088747 A<br>WO 2019051845 A1 | | 02-08-2019<br>21-03-2019 |

EPO FORM P0459

For more details about this annex : see Official Journal of the European Patent Office, No. 12/82